# EUROPEAN PATENT SPECIFICATION

(11) **EP 2 564 599 B1**
(45) Date of publication and mention of the grant of the patent: **30.07.2014**
(21) Application number: 11716532.4
(22) Date of filing: 26.04.2011
(51) Int. Cl.: H04Q 9/00, G01L 19/08, G01P 5/16, G01P 21/02

(54) **APPARATUS AND METHOD FOR MEASURING AN AIR PRESSURE AND SYSTEM FOR DETECTING AIR DATA**
VORRICHTUNG UND VERFAHREN ZUR MESSUNG EINES LUFTDRUCKS UND SYSTEM ZUR ERFASSUNG VON LUFTDATEN
APPAREIL ET PROCÉDÉ PERMETTANT DE MESURER UNE PRESSION DE L'AIR ET SYSTÈME PERMETTANT DE DÉTECTER DES DONNÉES AÉRODYNAMIQUES

(30) Priority: 28.04.2010 US 328778 P; 28.04.2010 DE 102010018547
(43) Date of publication of application: 06.03.2013
(73) Proprietor: Airbus Operations GmbH, 21129 Hamburg (DE); Airbus SAS, 31700 Blagnac (FR)
(72) Inventor: BOHLEN, Carsten, 31700 Cornebarrieu (FR); BOHLEN, Holger, 27751 Delmenhorst (DE); BLUNCK, Carsten, 22880 Wedel (DE); CAMMAS, Jean, 31000 Toulouse (FR)
(74) Representative: Maiwald Patentanwalts GmbH
(86) International application number: PCT/EP2011/056527
(87) International publication number: WO 2011/134931

(56) References cited:
- DE-C1- 4 013 921
- US-A1- 2005 278 120

## Description

### TECHNICAL FIELD

The invention relates to an apparatus for measuring an air pressure on an aircraft. The invention furthermore relates to a system for acquiring air data, to a method for measuring an air pressure, and to an aircraft comprising at least one device for measuring an air pressure.

### BACKGROUND TO THE INVENTION

Safe flight and proper operation of an aircraft make it indispensible on board the aircraft to regularly acquire essential air data, which, for example, also includes the static ambient pressure outside the aircraft. In order to fulfil this task, in the state of the art a host of various sensors exist which are, for example, arranged in close proximity to the outside of the aircraft. For the purpose of calibrating the anemometry and for re-gaining RVSM certification following structural repairs or the like, towed probes are temporarily used which are towed at a relatively large distance behind the aircraft in order to acquire air data with the least possible influence as a result of the aerodynamic flow around the aircraft. RVSM denotes "Reduced Vertical Separation Minimum"; it refers to reduced vertical separation which results in improved utilisation of airways.

Such towed sensors are well known from the state of the art; they include, for example, towed probes that can be guided by an air hose behind an aircraft and that, by means of a sensor arranged within the aircraft, with the use of the air hose can measure the ambient pressure in the region of the probe. Furthermore, directly-measuring towed sensors are also known which can be guided by a fibre optic line behind the aircraft, wherein the energy supply to the towed sensor is provided by transforming optical energy to electrical energy, and the sensor can communicate, by way of the fibre optic line with the aircraft or with an arithmetic unit arranged therein, for transmitting a measured value.

In the case of larger commercial aircraft, such towed sensors are frequently arranged on a vertical stabiliser so as to be extendable; they require a winding roll with a diameter significantly exceeding one metre, and thus conduit routing from the vertical stabiliser, which is normally not pressurised, to a pressurised region of an aircraft fuselage. This requires replacement of an end cap of the vertical stabiliser, a special ground test to determine the friction in the conduit, and re-painting of the end cap of the vertical stabiliser after deinstallation of the conduit.

DE 40 13 921 C1 shows apparatus for measuring the air pressure in the context of aircraft, which apparatus is designed as a towed system, wherein a fibre optic line is designed to act at the same time both as a retaining means for a towed sensor and as an energy transmission means for supplying the towed sensor.

### SUMMARY OF THE INVENTION

The above-mentioned towed sensors from the state of the art are not entirely suitable to meet all the requirements relating to light weight, good reliability in the context of repeated extension and retraction, and to little space requirement in a deactivated, i.e. retracted, state.

It is the object of the present invention to improve apparatus of the type mentioned above for measuring an air pressure in such a manner that the reliability can be improved while the weight and/or the installation space requirement can be reduced.

This object is met by apparatus for measuring an air pressure, which apparatus comprises the characteristic features of claim 1. Advantageous improvements are disclosed in the subordinate claims.

According to an exemplary embodiment, the apparatus according to the invention comprises a towed device with an enclosure, which towed device is connected to an actuating device by way of a linear retaining means. The actuating device is designed to be arranged in the aircraft, and by way of the linear retaining means to move the towed device relative to the aircraft in order to extend or retract said towed device in this manner.

In order to determine the static air pressure the apparatus according to the invention comprises at least one pressure sensor.

Furthermore, the towed device comprises an autarchic voltage supply device and a first communication device that is designed to transmit signals and/or data to a second communication device or to receive signals and/or data from said second communication device. The autarchic voltage supply device is connected to the first communication device, which in turn is designed to transmit measured data acquired by the sensor to the second communication device. The at least one pressure sensor is equipped to forward a determined static pressure to the first communication device.

In this arrangement the first communication device is designed as a wireless communication device which for communication does not require an electrically or optically conducting connection to the second communication device. For this purpose the first communication device comprises, for example, a modulator, an oscillation circuit and a transmitting and receiving antenna. It is understood that all suitable communication devices from the state of the art can be used for the transmission of data between the first communication device and the second communication device, including, for example, devices to improve reliability and/or data security, with such devices not being limited to analogue transmission mechanisms but in particular also mastering digital transmission mechanisms.

The apparatus according to the invention provides a special advantage in that transmission of the measured values relating to the static pressure between equipment in the towed device and the aircraft takes place independently of a mechanical connection between the towed device and the aircraft. Therefore this mechanical connection in the form of the linear retaining means can be attuned purely to the mechanical function of retaining the towed device. The linear retaining means used in the state of the art, for example a pressure hose or an optic fibre, are suited only to a limited extent to fulfilling this mechanical retaining function, because the primary functions consist of transmitting signals. There are other materials available to improve the retaining function. For example it would be advantageous to use wire cables or synthetic cables, for example comprising nylon or Kevlar of a particularly thin cross section, which cables not only feature very high tensile strength but at the same time are also particularly easily stowed away. In the case of thin wire cables or synthetic cables it is possible to achieve significantly smaller bending radii, which result in very easy stowability without negatively affecting the quality of physical signal transmission, which would be the case, for example, in a hose or an optical fibre as a result of excessive bending or buckling. The resulting small diameter of a winding roll or the like for taking up the linear retaining means can result in integration of the actuating device directly in a vertical stabiliser, and consequently it might thus be possible to do without conduit routing from a vertical stabiliser to a pressurised region of an aircraft.

Transmitting and receiving units that can wirelessly communicate with other transmitting and receiving units are presently already available in a greatly miniaturised form, so that the weight of the towed device is not determined to a significant extent by the first communication device, but instead to a large extent also by the pressure sensor itself. Furthermore, for example, batteries as autarchic voltage supplies are also available in greatly miniaturised form, for example in the form of high-performance lithium cells, wherein at the same time rechargeable batteries featuring a very good capacity-to-weight ratio also exist, for example lithium-polymer accumulators, which can practically be adapted to any desired design shape.

In a preferred embodiment the actuating device is designed as a winch that is equipped to retract or extend the linear retaining means, for example by rolling in or rolling out onto or from a reel or a winding roll.

In a particularly preferred embodiment the linear retaining means is designed as a nylon cable that comprises low density while at the same time providing very high tensile strength.

In a likewise preferred embodiment the linear retaining means is designed as at least one wire. If several wires are used they could be interconnected or twisted to form a wire cable.

Preferably, the enclosure of the towed device tapers off and at a thinner end comprises a device for connection to the linear retaining means. In operation this form is used to tension the linear retaining means, with the towed device attached to it, behind the aircraft as a result of the effect of the airflow, and to carry out an even straight-line movement.

In an exemplary embodiment of the invention the towed device comprises a solar cell as an autarchic voltage supply, which solar cell is arranged on the enclosure of the towed device and can be used in addition to a battery as an energy storage device or can be used independently thereof. Since calibration flights are mostly undertaken during daylight hours, a solar cell would be able to generate an adequate voltage that allows operation of the sensor.

In an exemplary embodiment of the invention the towed device additionally comprises a GPS receiver which transmits data by way of the transmitting and receiving unit. The GPS receiver can, in particular, be used for transmitting a geometric altitude, which makes possible the subsequent linking between a barometric altitude, determined by way of absolute pressure sensors, and the geometric altitude.

By linking the geometric altitude at the sensor position, the barometric altitude measured at the position of the towed vehicle, and the geometric altitude at a reference point of the aircraft, determined by means of an on-board GPS receiver, precise determination of the barometric altitude at an aircraft reference point can be undertaken. Any difference in altitude between the position of the towed vehicle and the position of the aircraft can thus be eliminated by correlating these various determined altitude values.

The object is also met by a system for measuring air data, by a method for measuring an air pressure, and by an aircraft comprising apparatus for measuring an air pressure.

### BRIEF DESCRIPTION OF THE FIGURES

Further characteristics, advantages and application options of the present invention are disclosed in the following description of the exemplary embodiments and of the figures. All the described and/or illustrated characteristics per se and in any combination form the subject of the invention, even irrespective of their composition in individual claims or their interrelationships. Furthermore, identical or similar components in the figures have the same reference characters.
Figures 1a, 1b, 1c, 1d and 1e show a diagrammatic view of exemplary embodiments of apparatus according to the invention.
Figure 2 shows a diagrammatic view of a system according to the invention.
Figure 3 shows an aircraft equipped with at least one system according to the invention.
Figure 4 shows a block diagram of a method according to the invention.

### DETAILED DESCRIPTION OF EXEMPLARY EMBODIMENTS

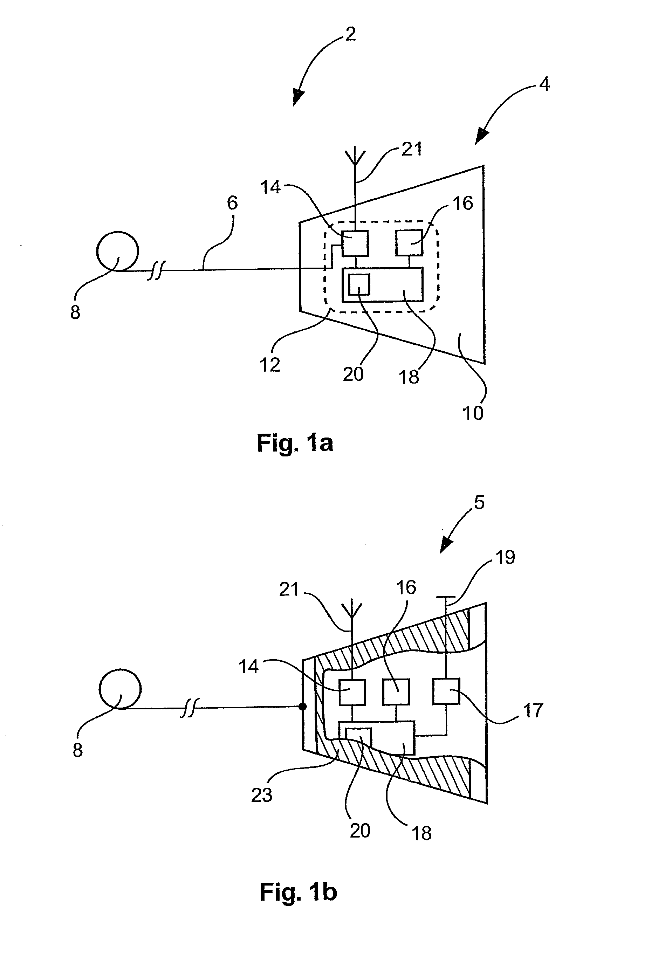

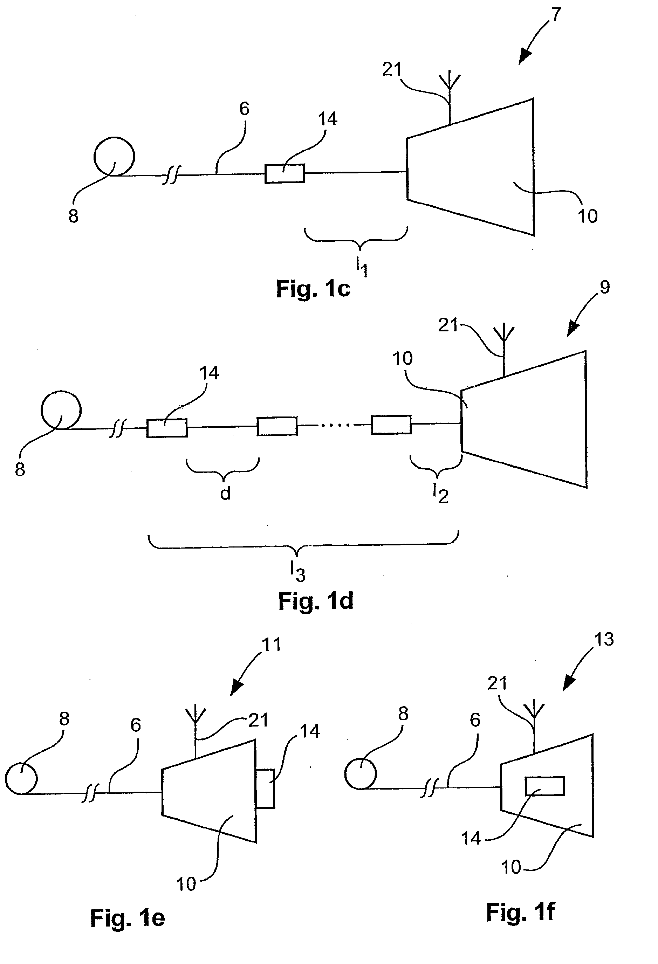

Figure 1a shows apparatus 2 according to the invention, which apparatus 2 comprises a towed device 4, a linear retaining means 6 and an actuating device 8. In this arrangement the towed device 4 comprises an enclosure 10 which in order to protect against dirt, moisture and dynamic pressure encloses a grouped arrangement of electronic and mechanical devices 12. The term "towed device" 4 refers to the device, arranged on the retaining means 6, which is towed behind the aircraft. It is not imperative for this towed device 4 to comprise measuring devices as shown in the exemplary embodiments of Figures 1c and 1d.

In the towed device 4 a pressure sensor 14, an energy storage device 16 as an autarchic voltage supply, and a first communication device 18 that is connected both to the energy storage device 16 and to the pressure sensor 14 are arranged. Preferably, apart from the actual provisions necessary for communication, the first communication device 18 also comprises an electronics unit 20 which processes signals or measured values of the pressure sensor 14 in such a manner that they can be transmitted in the form of data or signals to the outside to a further communication device.

Preferably, the first communication device 18 is a wireless communication device and is correspondingly connected to a transmitting and receiving antenna 21 that can be positioned at various positions inside or outside the enclosure 10. With corresponding dimensioning it would also be possible for the entire enclosure 10 to serve as an antenna for a predetermined narrow frequency range. On the other hand the antenna 21 could also be bonded in the shape of a wire or the like onto the outer surface of the enclosure 10, wherein corresponding insulation is to be affixed between the antenna 21 and the enclosure 10. As an alternative to this, the antenna 21 could also be designed so as to be rigid and could extend away from the enclosure 10 or it could be implemented as a slack stranded wire, protruding from the enclosure 10, with a corresponding insulation sheath in the manner of a wire antenna. Without limiting the invention to this, the first communication device 18 can, for example, be designed to implement data transmission by means of a frequency-spreading method which is insensitive to narrow-band interference.

The linear retaining means 6 is used to pull the enclosure 10, together with the devices contained therein, behind an aircraft, wherein the linear retaining means 6 is exclusively equipped to exert a pulling force on the towed device 4, which pulling force results from the aerodynamic flow around the enclosure 10 and from the associated aerodynamic resistance or drag.

In the case depicted, the actuating device 8 is designed as a winch with a motorised winding roll or the like, which winding roll is equipped to roll in and roll out the linear retaining means 6 and in so doing to retract it from, or extend it to, an airstream present behind an aircraft. By means of rolling in and rolling out, the towed device 4 can be removed from the movement means 8 in order to, in this manner, be able to measure a static pressure, for example at a predetermined distance from an aircraft, for example at 1-1.5 times the aircraft length.

Figure 1b shows a modified towed device 4 which in addition to the components shown in Fig. 1a also comprises a GPS receiver 17 that is connected to a GPS antenna 19 and to the first communication device 18. The GPS receiver 17 usually transmits GPS information at continuous intervals to the first communication device 18, which can use this information to transmit a geometric altitude to the aircraft, which geometric altitude has been determined by position finding. A barometric altitude determined in the aircraft can be correlated with the geographic altitude determined by position finding, or corresponding calibration of the barometric altitude display can be carried out.

In order to save additional weight, the GPS antenna 19 is preferably designed as a ceramic chip antenna, but it can at the same time also be designed as a separate antenna affixed to the enclosure 10, in particular if the enclosure 10 comprises a metallic material.

In addition to the above, the exemplary embodiment of Fig. 1b comprises a solar cell 23 as an autarchic voltage supply, which solar cell 23 could be arranged on the enclosure 12 and is connected to the first communication device 18. This can be in support of an energy storage device 16 which could be dimensioned so as to be correspondingly smaller, thus predominantly serving as a buffer storage device.

In the exemplary embodiment of Fig. 1c the pressure sensor 14 is not arranged within the enclosure 10 of a towed device 7, but instead, when seen upstream, is spaced apart from the enclosure 10 by a distance l₁ so as to be free of any aerodynamic influences of the enclosure 10. In this arrangement the pressure sensor 14 is preferably wired to the first communication device 18, which is located within the enclosure 10. If the retaining means 6 comprises a metallic material, it could be used as part of the wiring.

At the same time, according to Fig. 1d it is also possible to implement measuring a pressure gradient behind an aircraft in that a multitude of pressure sensors 14 are arranged, so as to be spaced apart from each other, on the retaining means 6 upstream of the enclosure 10 of a towed device 9. For example, the space d between the individual pressure sensors 14 is between 2 and 10 m, wherein the pressure sensors extend along a rear section of the retaining means 6, for example along a third. The overall length l₃ of this arrangement of pressure sensors 14 could, for example, be 50 m, with an overall length of the retaining means 6 of 150 m and a distance l₂ of, for example, less than 5 m from the enclosure 10.

In the design of such an exemplary embodiment it is important to use particularly flat and compact pressure sensors 14 so that rolling-in the retaining means 6 is not negatively affected. Furthermore, the pressure sensors 14 must be wired to the first communication device 18 so that the determined measured values can be transmitted to the aircraft. This could take place by means of particularly fine wiring, wherein in the embodiment of the retaining means 6 as a thin wire cable the retaining means 6 could be used as a shared voltage supply terminal or the like for the pressure sensors 14.

Figures 1e and 1f show further different positions of a pressure sensor 14. Fig. 1e, for example, demonstrates a pressure sensor 14, arranged behind the enclosure 10, on a towed device 11, while in Fig. 1f the pressure sensor 14 is arranged on the outside of the enclosure 10 of a towed device 13.

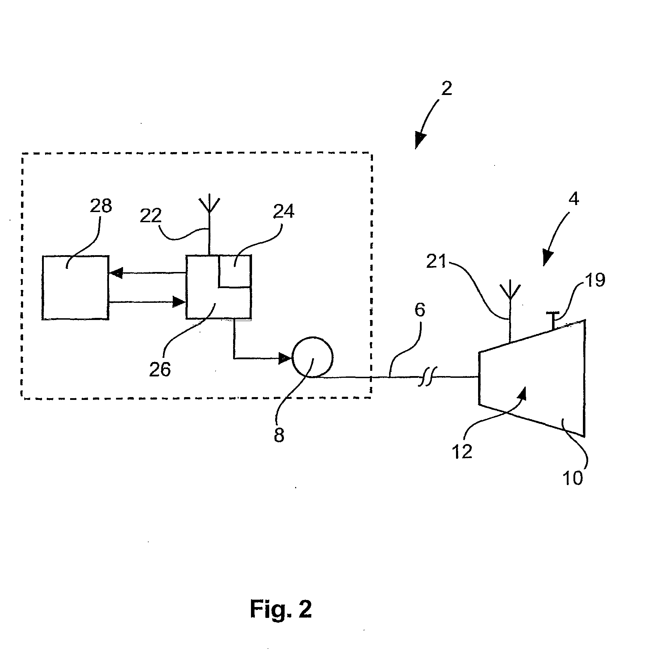

In a manner that differs from the above, Figure 2 shows an overall system according to the present invention, which apart from the apparatus 2 also comprises a second communication device 24 with an antenna 22, furthermore also a regulating unit 26 that is designed to both control the actuating device 8 and to forward the data transmitted by the towed device 4 to at least one corresponding electronics device 28 within the aircraft. The second communication device 24 could preferably be equipped for initiating the communication with the first communication device 18 so that, in an existing connection, data is transmitted in packets to the second communication device 24.

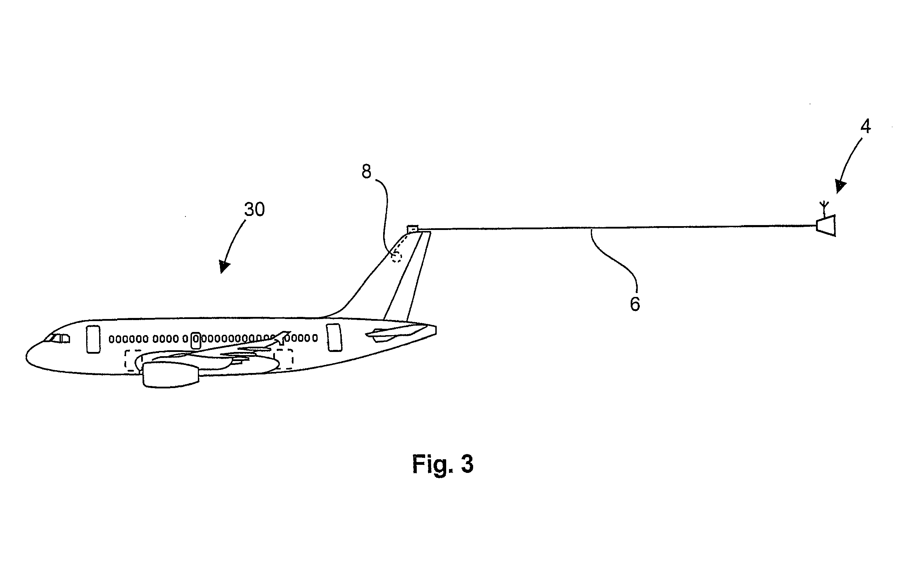

Figure 3 shows an aircraft 30 with a system according to the invention, which system makes it possible for the aircraft 30 to extend the towed device 4 behind the aircraft 30 in order to determine a static air pressure in that location. The distance between the towed device 4 and the rear delimitation of the aircraft 30 could, for example, be 1-1.5 times the aircraft length. Preferably, the apparatus according to the invention is arranged in a vertical stabiliser, particularly preferably in a front spar of the vertical stabiliser and/or in an end cap of the vertical stabiliser, wherein the linear retaining means 6 could be fed through an opening at an upper region of the vertical stabiliser above the rudder.

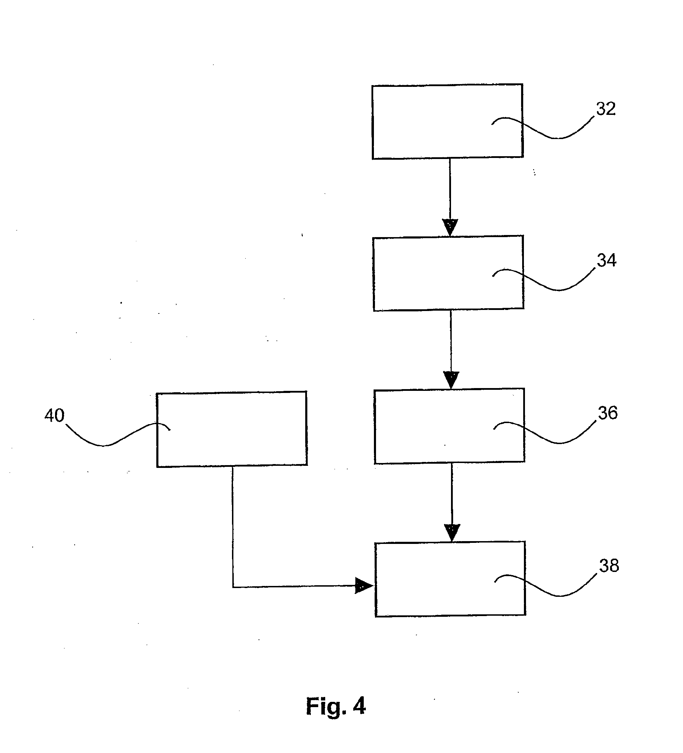

Furthermore, Figure 4 shows a block diagram of a method according to the invention, which method essentially comprises the steps of: extending 32 a towed device 4; measuring 34 a static air pressure; transmitting 36 the measured air pressure to a second communication device 24; and retracting 38 the towed device. Optionally, the method according to the invention could also comprise transmitting 40 geometric altitude data.

In addition, it should be pointed out that "comprising" does not exclude other elements or steps, and "a" or "one" does not exclude a plural number. Furthermore, it should be pointed out that characteristics or steps which have been described with reference to one of the above exemplary embodiments can also be used in combination with other characteristics or steps of other exemplary embodiments described above. Reference characters in the claims are not to be interpreted as limitations.

### LIST OF REFERENCE CHARACTERS

- 2: Device
- 4: Towed device
- 5: Towed device
- 6: Linear retaining means
- 7: Towed device
- 8: Actuating device
- 9: Towed device
- 10: Enclosure
- 11: Towed device
- 12: Grouped arrangement
- 13: Towed device
- 14: Pressure sensor
- 16: Energy storage device
- 17: GPS receiver
- 18: First communication device
- 19: GPS antenna
- 20: Electronics unit
- 21: Antenna
- 22: Antenna
- 23: Solar cell
- 24: Second communication device
- 26: Regulating unit
- 28: Electronics device
- 30: Aircraft
- 32: Extend
- 34: Measure
- 36: Transmit
- 38: Retract
- 40: Transmit

## Claims

1. Apparatus for measuring an air pressure, comprising
- a linear retaining means (6);
- a towed device (4, 5, 7, 9, 11, 13) with an enclosure (10);
- at least one pressure sensor (14) for measuring a static air pressure; and
- an actuating device (8) that can be positioned in an aircraft, for retracting and extending the linear retaining means (6);
**characterised in that** the towed device (4, 5, 7, 9, 11, 13) comprises an autarchic voltage supply (16, 23) and a wireless first communication device (18) that is connected to the autarchic voltage supply (16, 23), wherein the first communication device is equipped to transmit signals and/or data that represent acquired measurement data to a second communication device (24).

2. The apparatus of claim 1, wherein the actuating device (8) is designed as a winch that is equipped to retract or extend the linear retaining means (6).

3. The apparatus of claim 1 or 2, wherein the linear retaining means (6) is designed as a synthetic cable.

4. The apparatus of claim 3, wherein the synthetic cable comprises polyamide.

5. The apparatus of claim 1 or 2, wherein the linear retaining means (6) is designed as a wire cable.

6. The apparatus of any one of the preceding claims, wherein the autarchic voltage supply (16, 23) is at least in part designed as an energy storage device (16).

7. The apparatus of any one of the preceding claims, wherein the autarchic voltage supply (16, 23) is at least in part designed as a solar cell (23).

8. The apparatus of any one of the preceding claims, further comprising a GPS receiver (17) and a GPS antenna (19) that is connected to the first communication device (16) for transmitting a geographic altitude.

9. The apparatus of any one of the preceding claims, comprising a multitude of pressure sensors (14) arranged on the linear retaining means (6).

10. A system for acquiring air data, comprising apparatus for measuring an air pressure of any one of claims 1 to 9, and a second communication device (24) equipped for communicating with the first communication device (18) and for transmitting signals and/or data that represent acquired measurement data to an electronics device (28) that can be positioned in an aircraft.

11. A method for measuring a static air pressure, comprising the steps of
- extending (32) a towed device (4, 5, 7, 9, 11, 13) on a linear retaining means (6) to the surroundings of an aircraft;
- measuring (34) a static air pressure by means of at least one pressure sensor (14) on the towed device and/or on the linear retaining means (6);
- transmitting (36) the measured air pressure by means of a wireless first communication device (18) to a second communication device (24); and
- retracting (3 8) the towed device.

12. The method of claim 11, further comprising
- transmitting geographic altitude data provided by means of a GPS receiver (17) from the first communication device (18) to the second communication device (24).

13. The method of claim 12, further comprising
correlating a measured barometric altitude on an aircraft with the use of a geometric geographic altitude determined by the GPS receiver (17) on the towed device and a geometric altitude determined in the aircraft at a reference point by means of a GPS receiver on board the aircraft.

14. An aircraft comprising at least one item of apparatus of any one of claims 1 to 9.

15. The aircraft of claim 14, wherein the apparatus is arranged in a vertical stabiliser of the aircraft, and the vertical stabiliser comprises an opening for feeding the linear retaining means from the vertical stabiliser to an airflow surrounding the aircraft.

## Patentansprüche

1. Vorrichtung zum Erfassen eines Luftdrucks, aufweisend
- ein linienförmiges Haltemittel (6);
- einen Schleppkörper (4, 5, 7, 9, 11, 13) mit einem Gehäuse (10);
- mindestens einen Drucksensor (14) zum Erfassen eines statischen Luftdrucks; und
- eine in einem Fluggerät positionierbare Betätigungseinrichtung (8) zum Ein- und Ausfahren des linienförmigen Haltemittels (6);
**dadurch gekennzeichnet, dass** der Schleppkörper (4, 5, 7, 9, 11, 13) eine autarke Spannungsversorgung (16, 23) und eine mit der autarken Spannungsversorgung (16, 23) verbundene drahtlose erste Kommunikationseinrichtung (18) aufweist, wobei die erste Kommunikationseinrichtung dazu eingerichtet ist, Signale und/oder Daten, die erfasste Messdaten repräsentieren, an eine zweite Kommunikationseinrichtung (24) zu übertragen.

2. Vorrichtung nach Anspruch 1, wobei die Betätigungseinrichtung (8) als eine Winde ausgeführt ist, die dazu eingerichtet ist, das linienförmige Haltemittel (8) einzuziehen oder auszufahren.

3. Vorrichtung nach Anspruch 1 oder 2, wobei das linienförmige Haltemittel (8) als ein Kunststoffseil ausgeführt ist.

4. Vorrichtung nach Anspruch 3, wobei das Kunststoffseil aus Polyamid hergestellt ist.

5. Vorrichtung nach Anspruch 1 oder 2, wobei das linienförmige Haltemittel (8) als ein Drahtseil ausgeführt ist.

6. Vorrichtung nach einem der vorhergehenden Ansprüche, wobei die autarke Spannungsversorgung (16, 23) zumindest teilweise als eine Energiespeichereinheit (16) ausgeführt ist.

7. Vorrichtung nach einem der vorhergehenden Ansprüche, wobei die autarke Spannungsversorgung (16, 23) zumindest teilweise als Solarzelle (23) ausgeführt ist.

8. Vorrichtung nach einem der vorhergehenden Ansprüche, ferner aufweisend einen GPS-Empfännger (17) und eine GPS-Antenne (19), die mit der ersten Kommunikationseinrichtung (16) zum Übertragen einer geographischen Höhe verbunden ist.

9. Vorrichtung nach einem der vorhergehenden Ansprüche, aufweisend eine Mehrzahl von Drucksensoren (14), die an dem linienförmigen Haltemittel (8) angeordnet sind.

10. System zum Erfassen von Luftdaten, aufweisend eine Vorrichtung zum Erfassen eines Luftdrucks nach einem der Ansprüche 1 bis 9 sowie eine zweite Kommunikationseinrichtung (24), die dazu eingerichtet ist, mit der ersten Kommunikationseinrichtung (18) zu kommunizieren und Signale und/oder Daten, die erfasste Messdaten repräsentieren, an ein in einem Fluggerät positionierbares Elektronikgerät (28) zu übertragen.

11. Verfahren zum Messen eines statischen Luftdrucks, aufweisend die Schritte
- Ausfahren (32) eines Schleppkörpers (4, 5, 7, 9, 11, 13) an einem linienförmigen Haltemittel (6) in eine Umgebung eines Fluggeräts;
- Messen (34) eines statischen Luftdrucks mittels mindestens eines Drucksensors (14) an dem Schleppkörper und/oder dem linienförmigen Haltemittel (6);
- Übertragen (36) des gemessenen Luftdrucks mittels einer drahtlosen ersten Kommunikationseinrichtung (18) an eine zweite Kommunikationseinrichtung (24) und
- Einfahren (38) des Schleppkörpers.

12. Verfahren nach Anspruch 11, ferner aufweisend
- Übertragen von mittels eines GPS-Empfängers (17) bereitgestellten geographischen Höhendaten von der ersten Kommunikationseinrichtung (18) an die zweite Kommunikationseinrichtung (24).

13. Verfahren nach Anspruch 12, ferner aufweisend
Korrelation einer gemessenen barometrischen Höhe an einem Fluggerät unter Verwendung einer durch den GPS-Empfänger (17) bestimmten geometrischen geographischen Höhe an dem Schleppkörper und einer geometrischen Höhe bestimmt in dem Fluggerät an einem Referenzpunkt mittels eines GPS-Empfängers an Bord des Fluggeräts.

14. Flugzeug mit mindestens einer Vorrichtung nach einem der Ansprüche 1 bis 9.

15. Flugzeug nach Anspruch 14, wobei die Vorrichtung in einem Seitenleitwerk des Flugzeugs angeordnet ist und das Seitenleitwerk eine Öffnung zum Durchführen des linienförmigen Haltemittels aus dem Seitenleitwerk in eine das Flugzeug umgebende Strömung aufweist.

## Revendications

1. Appareil pour mesurer une pression d'air, comprenant :
- un moyen de retenue linéaire (6),
- un dispositif remorqué (4, 5, 7, 9, 11, 13) avec une enceinte (10) ;
- au moins un capteur de pression (14) pour mesurer une pression d'air statique ; et
- un dispositif d'actionnement (8) qui peut être positionné dans un aéronef, pour rétracter et déployer le moyen de retenue linéaire (6) ;
**caractérisé en ce que** le dispositif remorqué (4, 5, 7, 9, 11, 13) comprend une alimentation en tension autarcique (16, 23) et un premier dispositif de communication sans fil (18) qui est relié à l'alimentation en tension autarcique (16, 23), dans lequel le premier dispositif de communication est prévu pour transmettre des signaux et/ou de données qui représentent des données de mesure acquises à un second dispositif de communication (24).

2. Appareil selon la revendication 1, dans lequel le dispositif d'actionnement (8) est conçu sous la forme d'un treuil qui est prévu pour rétracter ou déployer le moyen de retenue linéaire (6).

3. Appareil selon la revendication 1 ou 2, dans lequel le moyen de retenue linéaire (6) est conçu sous la forme d'un câble synthétique.

4. Appareil selon la revendication 3, dans lequel le câble synthétique comprend un polyamide.

5. Appareil selon la revendication 1 ou 2, dans lequel le moyen de retenue linéaire (6) est conçu sous la forme d'un câble métallique.

6. Appareil selon l'une quelconque des revendications précédentes, dans lequel l'alimentation en tension autarcique (16, 23) est au moins en partie conçue sous la forme d'un dispositif de stockage d'énergie (16).

7. Appareil selon l'une quelconque des revendications précédentes, dans lequel l'alimentation en tension autarcique (16, 23) est au moins en partie conçue sous la forme d'une cellule solaire (23).

8. Appareil selon l'une quelconque des revendications précédentes, comprenant en outre un récepteur GPS (17) et une antenne GPS (19) qui est reliée au premier dispositif de communication (16) pour transmettre une altitude géographique.

9. Appareil selon l'une quelconque des revendications précédentes, comprenant une multitude de capteurs de pression (14) agencés sur le moyen de retenue linéaire (6).

10. Système d'acquisition de données d'air, comprenant un appareil pour mesurer une pression d'air selon l'une quelconque des revendications 1 à 9, et un second dispositif de communication (24) prévu pour communiquer avec le premier dispositif de communication (18) et pour transmettre des signaux et/ou des données qui représentent des données de mesure acquises à un dispositif électronique (28) qui peut être positionné dans un aéronef.

11. Procédé pour mesurer une pression d'air statique, comprenant les étapes consistant à :
- déployer (32), un dispositif remorqué (4, 5, 7, 9, 11, 13) sur un moyen de retenue linéaire (6) dans l'environnement d'un aéronef ;
- mesurer (34) une pression d'air statique par l'intermédiaire d'au moins un capteur de pression (14) sur le dispositif remorqué et/ou sur le moyen de retenue linéaire (6) ;
- transmettre (36) la pression d'air mesurée par l'intermédiaire d'un premier dispositif de communication sans fil (18) à un second dispositif de communication (24) ; et
- rétracter (38) le dispositif remorqué.

12. Procédé selon la revendication 11, comprenant en outre :
- la transmission de données d'altitude géographiques fournies par l'intermédiaire d'un récepteur GPS (17) à partir du premier dispositif de communication (18) au second dispositif de communication (24).

13. Procédé selon la revendication 12, comprenant en outre :
- la corrélation d'une altitude barométrique mesurée sur un aéronef à l'aide d'une altitude géographique géométrique déterminée par le récepteur GPS (17) sur le dispositif remorqué et d'une altitude géométrique déterminée dans l'aéronef en un point de référence au moyen d'un récepteur GPS à bord de l'aéronef.

14. Aéronef comprenant au moins un élément de l'appareil selon l'une quelconque des revendications 1 à 9.

15. Aéronef selon la revendication 14, dans lequel l'appareil est agencé dans un plan fixe vertical de l'aéronef, et le plan fixe vertical comprend une ouverture permettant de déployer le moyen de retenue linéaire à partir du plan fixe vertical dans un flux d'air entourant l'aéronef.
